# EUROPÄISCHE PATENTSCHRIFT

(11) **EP 1 311 101 B1**
(45) Veröffentlichungstag und Bekanntmachung des Hinweises auf die Patenterteilung: **13.04.2011**
(21) Anmeldenummer: 01126801.8
(22) Anmeldetag: 09.11.2001
(51) Int. Cl.: H04M 3/493, H04M 7/00, H04Q 3/00

(54) **Bereitstellung von IVR Ressourcen in BICC Netzen**
Provision of IVR resources in BICC networks
Fournitures des ressources interactives à réponse vocale dans des réseaux BICC

(43) Veröffentlichungstag der Anmeldung: 14.05.2003
(73) Patentinhaber: Nokia Siemens Networks GmbH & Co. KG, 81541 München (DE)
(72) Erfinder: Hoffmann, Klaus, 81735 München (DE)

(56) Entgegenhaltungen:
- WO-A-01/49011
- KNIGHT R R ET AL: "BEARER-INDEPENDENT CALL CONTROL" BT TECHNOLOGY JOURNAL, BT LABORATORIES, GB, Bd. 19, Nr. 2, 1. April 2001 (2001-04-01), Seiten 77-88, XP001034590 ISSN: 1358-3948
- ANONYMOUS: "Bearer Indepedent Call Control Protocol (CS2) Functional Description, Draft Recommendation Q.1902.1" INTERNATIONAL TELECOMMUNCATION UNION, [Online] Juli 2001 (2001-07), XP002197241 Gefunden im Internet: <URL:www.itu.int/itudoc/itu-t/circ/01-04_1 /035_ww9.doc> [gefunden am 2002-04-23]
- GREG RATTA: "Bearer Independent Call Control and its application of H.248 in public networks" ITU-T IP/MEDIACOM 2004 WORKSHOP, [Online] 26. April 2001 (2001-04-26), XP002197242 Gefunden im Internet: <URL:www.itu.int/itudoc/itu-t/com13/ipexpe rt/ipmedia/71396.html> [gefunden am 2002-04-23]
- "SIGNALLING SYSTEM NO.7 - APPLICATION TRANSPORT MECHANISM: BEARER INDEPENDENT CALL CONTROL (BICC)" ITU-T RECOMMENDATION Q765.5, XX, XX, Juni 2000 (2000-06), Seiten 1-28, XP002192024

## Beschreibung

Die Erfindung betrifft ein Verfahren zur Bereitstellung von IVR (interactive voice response) Ressourcen mit Hilfe des BICC Protokolls.

In der Druckschrift KNIGHT R R ET AL: "BEARER-INDEPENDENT CALL CONTROL" BT TECHNOLOGY JOURNAL, BT LABORATORIES, GB, Bd. 19, Nr. 2, 1. April 2001 (2001-04-01), Seiten 77-88, XP001034590 ISSN: 1358-3948, wird BICC (BEARER-INDEPENDENT CALL CONTROL) in größerer Tiefe erklärt, wobei Anforderungen, funktionale Modellierung, Informationsflüsse und Protokollaspekte abgedeckt werden.

Die Realisierung bzw. Verbesserung von Telekommunikationsdiensten mit automatischer Sprachausgabe und Sprachübertragung über ein Paketnetz ist derzeit ein wichtiger Aufgabenbereich vermittlungstechnischer Entwicklungsarbeit.

Paketnetze bieten vielfach umfangreiche Übertragungskapazitäten und werden bereits in großem Umfang für die Übertragung von Daten genutzt. Gegenwärtig werden vermehrt Anstrengungen unternommen, die von Paketnetzen bereitgestellte Bandbreite auch für sprachbasierte Dienste zu verwenden. Beispielsweise wird daran gearbeitet, über das Internet mit Hilfe des Internet Protokolls (IP) sprachbasierte Dienste zu realisieren. Man spricht in diesem Zusammenhang oft von Voice over IP, abgekürzt mit VoIP.

Die Übertragung von Sprachdaten über Paketnetze hat gegenüber der herkömmlichen, leitungsvermittelten Übertragung über sogenannte TDM (time division multiplexing) Netze den Vorteil größerer Flexibilität und einer besseren Ausnutzung der zur Verfügung stehenden Übertragüngskapazität. Auf Grund der Kapazitätsausnutzung der zur Verfügung stehenden Paketnetze geht man auch von niedrigeren Kosten für sprachbasierte Dienste im Vergleich zur leitungsvermittelten Übertragung aus.

Für die Akzeptanz von sprachbasierten Diensten mit Datenübertragung über ein Paketnetz spielt eine wichtige Rolle, dass die Dienstmerkmale, die bei Sprachübertragung über ein TDM Netz angeboten werden, auch bei Übertragung über ein Paketnetz zur Verfügung stehen.

Für die Steuerung von Sprachverbindungen mit Nutzdatenübertragung über ein Paketnetz wurde das BICC (bearer independent call control) Protokoll entwickelt, das in den ITU-T Standards Q.1901 und Q.1902 beschrieben ist.

Im Rahmen der Datenübertragung mit dem BICC Protokoll werden die Nutzdaten und die Signalisierungsinformationen häufig getrennt voneinander übertragen. Im Rahmen einer mit Hilfe des BICC Protokolls aufgebauten Verbindung können die Signalisierungsinformationen über ein CMN (call mediation node) geführt werden. Entsprechend der ITU-T Q.1901 erfüllen CMNs Steuerfunktionen ohne wie SNs (service nodes) direkten Zugriff auf das Routing der Nutzdaten zu haben. CMNs können in BICC Netzen optional zum Einsatz kommen. Eine mögliche Anwendung von CMNs ist bei hierarchisch strukturierter Vermittlung die Steuerung bzw. Lenkung der Signalisierungsinformationen auf höheren Vermittlungsebenen, von denen aus kein Zugriff auf das Nutzdatenrouting besteht.

Laut Standard (Q.1902.4, Abschnitt 9.5.2 und Q.1901 Abschnitt 10.2.2.4 a) und Appendix III) ist es nicht möglich, in einem CMN Ansagen oder Töne, d.h. IVR (interactive voice response) Ressourcen anzulegen. Es wird lediglich auf die Möglichkeit verwiesen, mit Hilfe einer Fehlermeldung (cause value) eine Unterbrechung des aktuellen Zustands herbeizuführen und eine Verbindung zu an anderer Stelle - beispielsweise bei einer SN - bereitgestellten IVR Ressourcen zu realisieren.

Die Erfindung hat zur Aufgabe, ein Verfahren für die Bereitstellung von IVR Ressourcen durch einen CMN anzugeben.

Die Aufgabe wird durch ein Verfahren nach Anspruch 1 gelöst.

Bei dem erfindungsgemäßen Verfahren wird die BICC Prozedur BEARER REDIRECTION (entsprechend der Q.1902.6) verwendet, um bei einem CMN (call service node) IVR (interactive voice response) Ressourcen zur Verfügung zu stellen. Der CMN stößt dabei bei einem ihm vorgelagerten SN (service node) die BICC Prozedur BEARER REDIRECTION an. Mit Hilfe der BICC Prozedur BEARER REDIRECTION wird eine Nutzdaten-Verbindung hergestellt, durch die Zugriff auf IVR Ressourcen realisiert wird (Anspruch 1).

Die IVR Funktionalität kann direkt im CMN realisiert sein oder von einem IVR Server bereitgestellt werden, der beispielsweise von dem CMN gesteuert wird. Alternativ kann auch auf IVR Ressourcen bzw. einen IVR Server zugegriffen werden, die nicht von diesem CMN gesteuert werden, sondern von einem SN gesteuert werden (Anspruch 3). In diesem Fall verfügt der CMN beispielsweise über einen Tabelleneintrag mit einer auf das SN bezogenen Adressinformation. Diese Adressinformation wird während des Verbindungsaufbaus - wie in der Q.1902.6 beschrieben - im Rahmen einer Verbindungsaufbaunachricht IAM (initial address message) von dem CMN an das SN, bei dem die IVR Ressourcen bereitgestellt sind, übermittelt.

Die Signalisierung zwischen dem CMN und dem IVR Server kann z.B. mit Hilfe des Mediagatewayprotokolls oder des H.248 Protokolls vorgenommen werden. Die BICC Prozedur BEARER REDIRECTION ist in der Q.1902.6 beschrieben. Eventuell verfügt der CMN nicht über die Information, ob der vorgelagerte SN die BICC Prozedur unterstützt. Es bietet sich dann an, vom CMN zu überprüfen, ob das vorgelagerte SN die Prozedur unterstützt (Anspruch 9) und bei negativen Ergebnis entsprechend der herkömmlichen Methode der Q.1902.6 eine allgemeine Fehlermeldung (cause value) an das vorgelagerte SN zu übertragen (Anspruch 10). Hinsichtlich der Bereitstellung von IVR Ressourcen durch den CMN macht es Sinn, zwei Fälle zu unterscheiden. Zum einen kann durch ein Ereignis beim CMN eine bestehende Nutzdaten-Verbindung verändert werden, indem einer der Endpunkte der Nutzdaten-Verbindung zu den IVR Ressourcen gelegt wird. Die bestehende Nutzdaten-Verbindung kann dann im Rahmen der Prozedur BEARER REDIRECTION gelöst werden (Anspruch 7). Der andere Fall betrifft einen Verbindungsaufbau, bei dem die Adressinformationen des Endpunkts der Nutzdaten-Verbindung im Sinne einer Nutzdaten-Verbindung mit dem IVR Server abgeändert wird (Anspruch 8). Anstelle einer Nutzdaten-Verbindung zu dem ursprünglichen Ziel wird eine Nutzdaten-Verbindung mit dem IVR Server aufgebaut. Herkömmlich würde in solch einen Fall, bei dem in einem CMN die Adresse bzw. der Endpunkt der aufzubauenden Nutzdaten-Verbindung zu ändern wäre, eine Fehlermeldung (cause value) beispielsweise an eine vorgelagerte Einrichtung mit Zugriff zum Nutzdatenrouting übermittelt werden. Entsprechend der Terminologie des Standards Q.1902 würde ein cause value, d.h. eine Fehlermeldung, als Teil einer REL (release message) an eine vorgelagerte CSF (call service function) übertragen werden. Das erfindungsgemäße Verfahren erlaubt einen direkten Verbindungsaufbau zu einem IVR Server unter Kontrolle des CMN.

Durch das erfindungsgemäße Verfahren können IVR Ressourcen direkt bei einem CMN bereitgestellt werden. Beispielsweise wenn das CMN in einer höheren Vermittlungsebene zum Einsatz kommt und entsprechend viele Verbindungen über das CMN laufen, können durch das erfindungsgemäße Verfahren an einer relativ zentralen Stelle IVR Ressourcen bereitgestellt werden. Das hat Vorteile z.B. hinsichtlich der Auslastung von relativ kostenintensiven IVR Servern. Der Rückgriff auf die im Rahmen des BICC Protokolls zur Verfügung stehende Prozedur BEARER REDIRECTION vermeidet zusätzlichen Aufwand und den Nachteil mangelnder Kompatibilität von proprietären bzw. herstellerspezifischen Lösungen.

Auf Grund der Einheitlichkeit bezüglich der verwendeten Verfahren zur Bereitstellung von IVR Ressourcen ist es naheliegend, auch in dem CMN vorgelagerten oder nachgelagerten SNs im Zuge von der Bereitstellung von IVR Ressourcen von der Prozedur BEARER REDIRECTION Gebrauch zu machen (Anspruch 10) um auf einen, evtl. denselben Ressourcenserver zuzugreifen.

Im folgenden wird die Erfindung anhand von zwei Ausführungsbeispielen genauer beschrieben. Es zeigen
Fig.1: Funktion der Prozedur BEARER REDIRECTION
Fig.2: System mit einem CMN für eine Verbindung mit getrennter Übertragung von Nutzdaten und Signalisierungsinformation
Fig.3: Bereitstellung von IVR Ressourcen bei dem CMN für ein System entsprechend Figur 2
Fig.4: Bereitstellung von IVR Ressourcen für ein System entsprechend Figur 2 bei einem dem CMN nachgelagerten SN

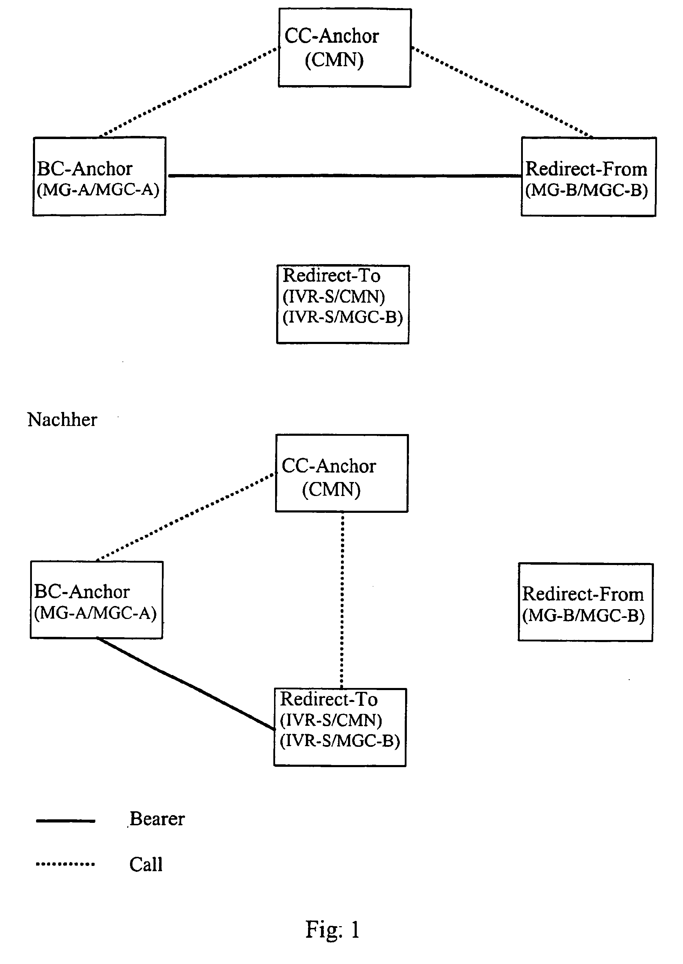

Die BICC Prozedur BEARER REDIRECTION ist in der ITU-T Dokument Q.1902.6 beschrieben. Im folgenden werden die Ausführungen der Q.1902.6 und die dort verwendete Terminologie mit Hilfe der Figur 1 zu der bei der Erfindung verwendeten Terminologie bzw. zum Ausführungsbeispiel in Beziehung gesetzt. Ein zentrales Vorrichtungselement von BICC Netzen ist der mit SN (service node) angekürzte Knotenpunkt. "Service node" ist ein allgemeiner Ausdruck für im Rahmen von Diensten benötigte funktionelle Vorrichtungselemente (siehe z.B. Q.1902.4). Weitere wichtige Begriffe, die in dem Standard genannt werden, sind CALL und BEARER. Im Rahmen dieser Erfindungsmeldung wird CALL mit Signalisierungsinformationen bzw. Strom der Signalisierungsinformationen und BEARER mit Nutzdaten-Verbindung wiedergegeben. Dabei handelt es sich nicht um eine Übersetzung der englischen Begriffe, die aus dem Kontext der ITU Nomenklatur zu verstehen sind, und sich deshalb nicht eins zu eins ins Deutsche übertragen lassen, sondern um eine Umschreibung, die im Hinblick auf eine Verdeutlichung der Funktion der Prozedur BEARER REDIRECTION bei der Erfindung gewählt ist. In diesem Sinne wird BEARER REDIRECTION mit "Umlenkung des Nutzdatenstroms" wiedergegeben.

Der Figur 1 sind vier verschiedene Knotenpunkte dargestellt: CC-Anchor: Ein SN oder CMN, über den die Signalisierungsinformationen geführt werden und bei dem die Umlenkung des Nutzdatenstroms ausgelöst wird. CC steht für "Call Control". BC-Anchor: Ein SN mit Funktionen bei der Steuerung des Nutzdatenstroms. Er entspricht dem Knotenpunkt im Pfad der Nutzdaten, bei dem die Umlenkung des Nutzdatenstroms vorgenommen wird.
Redirect-from: Ein SN, bei dem die Signalisierungsinformationen und die Nutzdaten-Verbindung ursprünglich terminieren. Redirect-to: Ein SN, bei dem die Signalisierungsinformationen und die Nutzdaten-Verbindung nach der Umlenkung des Nutzdatenstroms terminieren.

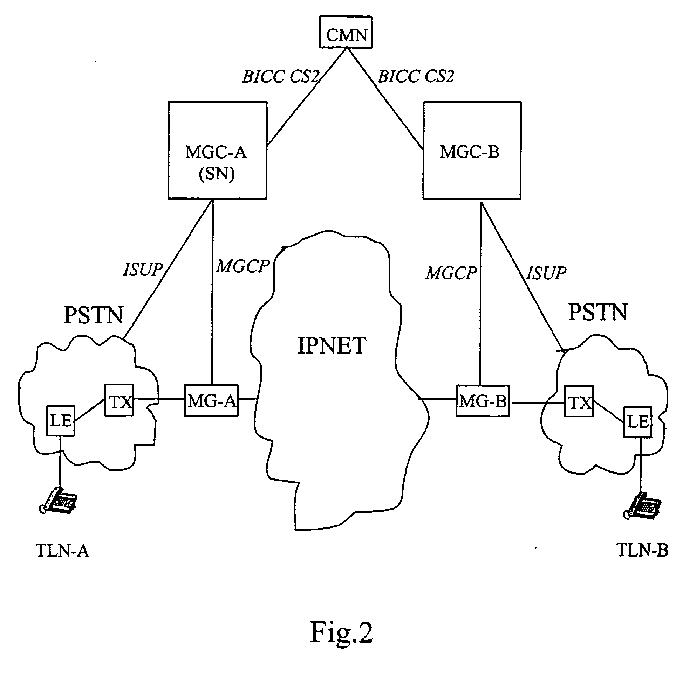

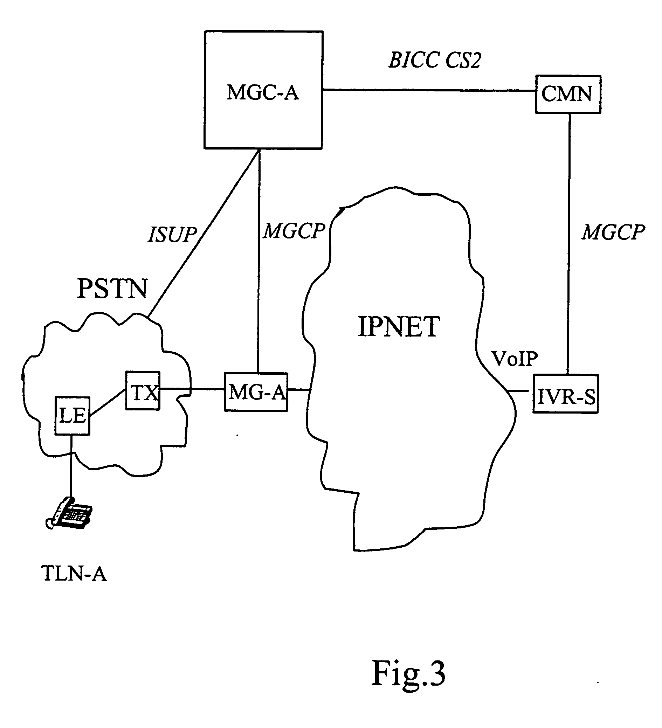

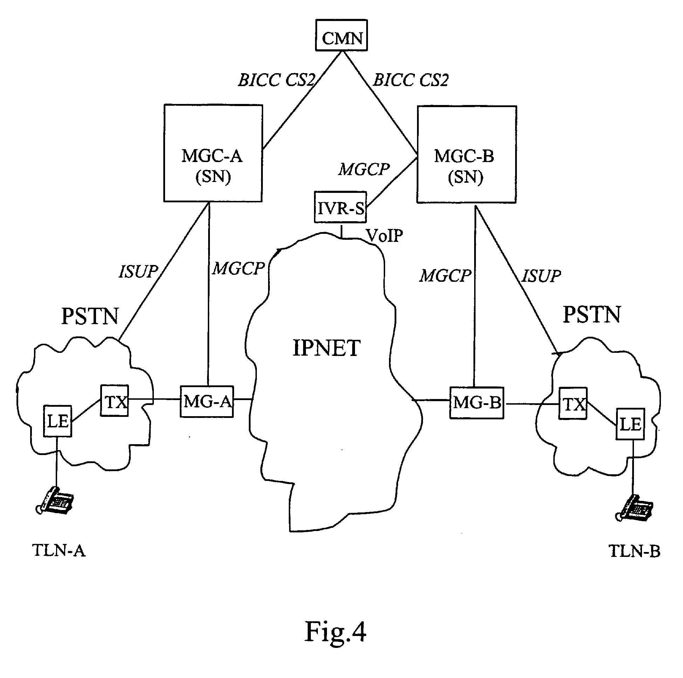

In Figur 2 ist ein System mit einem CMN gezeigt. Es werden zwei verschiedene Beispiele dargestellt, bei denen IVR Ressourcen entweder bei dem CMN (Figur 3) oder bei einem nachgelagerten SN (Figur 4) bereitgestellt werden.

Die in der Q.1902.4 verwendeten Bezeichnungen und die Bezeichnungen des ersten Ausführungsbeispiels (Figur 3) hängen folgendermaßen zusammen:
CC-Anchor: Umfasst Funktionen des CMN aus Figur 2.
BC-Anchor: Umfasst Funktionen der A-seitigen Netzzugangseinrichtung MG-A und Steuervorrichtung MGC-A.
Redirect-from: Umfasst Funktionen der B-seitigen Netzzugangseinrichtung MG-B für die Nutzdaten und der zugehörige Steuervorrichtung MGC-B für die Signalisierungsinformationen. Redirect-To: Umfasst Funktionen des CMN und des IVR-Servers IVR-S aus Figur 3.

Die korrespondierenden Bezeichnungen des ersten Ausführungsbeispiels (Figur 3 und Figur 2 für den Redirect-From Knotenpunkt) sind in Klammern angegeben.

Das zweite Ausführungsbeispiel (Figur 4) unterscheidet sich hinsichtlich Redirect-To von dem ersten. Der Zusammenhang ist dann:

Redirect-To: Umfasst Funktionen des IVR-Servers IVR-S aus Figur 4 und der Steuervorrichtung MGC-B.

Diese unterschiedliche Zuordnung von Redirect-To ist in Figur 1 in Klammern unter der Zuordnung des ersten Ausführungsbeispiels angegeben.

Figur 1 stellt den allgemeinsten Fall dar. Das in der Figur 3 dargestellte Ausführungsbeispiel ist nicht direkt auf den allgemeinsten Fall übertragbar, weil die Funktionen der Knotenpunkte CC-Anchor und Redirect-to im Ausführungsbeispiel nicht vollständig getrennt sind. Die Zuordnung der Elemente aus der Figur 1 zu den Elementen des ersten Ausführungsbeispiels wird im folgenden besprochen. Bei dem ersten Ausführungsbeispiel werden die Knotenpunkte CC-Anchor und Redirect-To zusammengelegt und ihre Funktionen als durch das CMN und den IVR-Server IVR-S realisiert betrachtet. Die Signalisierung zwischen dem CMN und dem IVR-Server IVR-S mittels Mediagatewayprotokoll MGCP oder H.248 ist dann als Knotenpunktinterne Signalisierung anzusehen, die sich in Figur 1, in der die gesamte dargestellt Signalisierung (Call) mit Hilfe des BICC Protokolls vorgenommen wird, nicht widerspiegelt.
Die anderen Knotenpunkte entsprechend der Darstellung der Q.1902.6 bzw. Figur 1 fassen teilweise Funktionen der Signalisierung und Routing des Nutzdatenstroms zusammen. Dagegen sind in Figur 2 unterschiedliche physikalische Knotenpunke für die Steuerung des Stromes der Signalisierungsinformationen (z.B. MGC-A, MGC-B) und des Nutzdatenstroms (MG-A, MG-B) gegeben. Eine der Figur 1 entsprechende Konstellation erhält man, wenn man die Funktionen von MGC-A und MG-A sowie MGC-B und MG-B in jeweils einem physikalischen Kontenpunkt realisiert. Dieser Unterschied in der Realisierung hat auf den prinzipiellen Ablauf der Prozedur BEARER REDIRECTION keine Auswirkung.

Bei dem zweiten Ausführungsbeispiel sind dagegen die Knotenpunkte CC-Anchor und Redirect-To getrennt durch den CMN einerseits und dem IVR-Server IVR-S und der Steuervorrichtung MGC-B andererseits realisiert.

Die Prozedur der Umlenkung ist im Detail im Abschnitt 6.5 der Q.1902.6 dargestellt. Die für das Verständnis der Erfindung wesentlichen Punkte werden im folgenden im Rahmen des Ausführungsbeispiels des erfindungsgemäßen Verfahrens angesprochen. Dabei wird die Prozedur für die Umlenkung des Nutzdatenstroms mit Auslösung der Nutzdaten-Verbindung zwischen BC-Anchor und Redirect-From beschrieben. Die Auslösung kann im Rahmen der Prozedur BEARER REDIRECTION auch unterbleiben.

Entsprechend Figur 1 oben besteht ursprünglich eine Nutzdaten-Verbindung von BC-Anchor zu Redirect-From. Die Signalisierung läuft über CC-Anchor. Bei dem CC-Anchor wird die Umlenkung des Nutzdatenstroms (BEARER) ausgelöst. Von dem CC-Anchor wird zum vorgelagerten SN ("preceding node") eine APM (application transport mechanism) Nachricht geschickt, die den Indikator "Bearer Redirect", der den Start der Prozedur anzeigt, und den Indikator "Redirect Forwards Request", der die zu startende Prozedur spezifiziert, umfasst. Situationsabhängig kann der Indikator "Redirect Backwards Request" anstatt des Indikators "Redirect Forwards Request" zum Einsatz kommen. Der vorgelagerte SN, d.h. der BC-Anchor in Figur 1, antwortet mit einer APM Nachricht mit dem Indikator "Connect Forward" bzw. "Connect Backward" sowie weiteren Informationen im Sinne des Aufbaus einer Nutzdaten-Verbindung.

Gleichzeitig kann die Auslösung der ursprünglichen Nutzdaten-Verbindung von dem CC-Anchor durch Senden einer APM Nachricht an das vorgelagerte SN angestoßen werden, wobei die APM Nachricht den Aktions-Indikator "Bearer Redirect' und den Indikator "Redirect Bearer Release Request", der als Aktion das Auslösen der Nutzdaten-Verbindung spezifiziert, umfasst. Das vorgelagerte SN antwortet mit einer APM Nachricht mit dem Aktions-Indikator "Bearer Redirect' und dem Indikator "redirect bearer release proceed". Auf Erhalt dieser APM Nachricht sendet der CC-Anchor die Nachricht REL (release message) an den Redirect-From und löst so die Nutzdaten-Verbindung aus. Redirect-From antwortet mit Senden der Nachricht RLC (release message complete) an den CC-Anchor. Der CC-Anchor sendet daraufhin eine APM Nachricht mit Aktions-Indikator "Bearer Redirect" und dem Indikator "redirect bearer release complete" an den vorgelagerten SN zurück.

In Figur 1 ist die Situation vor ("Vorher") und nach ("Nachher") der Umlenkung dargestellt. Die ursprünglich bestehende Nutzdaten-Verbindung zwischen BC-Anchor und Redirect-From wird ausgelöst und ist unten ersetzt durch die Nutzdaten-Verbindung BC-Anchor zu Redirect-To. Die Signalisierungsinformationen laufen dann über CC-Anchor zu Redirect-To statt zu Redirect-From.

Eine Alternative bei der Auslösung der bestehenden Nutzdaten-Verbindung ist die Prozedur "Break before make", die die bestehende Nutzdaten-Verbindung sofort auslöst.

In der Figur 2 ist ein System für ein über ein Paketnetz IPNET, beispielsweise ein auf dem Internet Protokoll basierendes Netz, geleitetes Telefonat dargestellt. Die beteiligten Endgeräte TLN-A und TLN-B sind beide an ein PSTN-Netz (public switched telephone network) angeschlossen. Für die PSTN-Netze wird üblicherweise die Zeitmultiplextechnik - auch mit TDM (time division multiplexing) abgekürzt - verwendet, um Daten von verschiedenen Endgeräten bzw. Kanälen zusammenzuführen und über hochkapazitive Verbindungsleitungen - häufig als Trunk bezeichnet - zu übertragen. Für das Ausführungsbeispiel wird angenommen, dass es sich bei dem Endgerät TLN-A um das rufende Endgerät und bei dem Endgerät TLN-B um das gerufene handelt. Nutzdaten und Steuerungsinformationen werden beim Telefonat getrennt geführt, wie beim SS#7 Signalisierungssystem vorgesehen. Die Nutzdaten werden vom Endgerät TLN-A an eine teilnehmernahe Endvermittlungsstelle LE und von dort an eine Transitvermittlungsstelle TX übertragen. Die Transitvermittlungsstelle TX ist mit einem Netzzugangselement MG-A (MG: für Media Gateway) verbunden, das für die Bearbeitung von TDM Nutzdaten zur Übertragung über ein Paketnetz IPNET vorgesehen ist. Über das Paketnetz IPNET im Rahmen einer Sprachanwendung übertragene Nutzdaten werden empfängerseitig wieder von einem Netzzugangselement MG-B bearbeitet, um dann über ein PSTN Netz zuerst zu einer Transitvermittlungsstelle TX und schließlich zu einer teilnehmernahen Endvermittlungsstelle LE und dem Teilnehmerendgerät TLN-B übertragen zu werden. Signalisierungsdaten zum Aufbau einer Verbindung werden dagegen zu der Steuereinheit MGC-A (MGC: für Media Gateway Controller) übermittelt, der die A-seitige Netzzugangseinheit MG-A zugeordnet ist. Zur Kontrolle und Steuerung des Nutzdatenstroms kommuniziert die Steuereinheit MGC-A mit dem A-seitigen Netzzugangseinheit MG-A. Beispielsweise im Rahmen des Verbindungsaufbaus werden Signalisierungsinformationen von der A-seitigen Netzzugangseinheit MGC-A über ein CMN an die B-seitige Steuereinheit MGC-B übermittelt.

Die Bezugszeichen der für den Austausch von Signalisierungsinformationen verwendeten Protokolle sind in der Figur durch Kursivschrift hervorgehoben. Über die PSTN-Netze an die Steuereinheiten MGC-A und MGC-B übermittelte Signalisierungsinformationen werden mit Hilfe des ISUP (ISDN user part) Protokolls übertragen. Für den Austausch von Informationen zwischen den Steuereinheiten MGC-A und MGC-B und den Netzzugangseinrichtungen MG wird ein evtl. herstellerspezifisch angepasstes Mediagatewaykontrolprotokoll MGCP verwendet. Alternativ dazu kann die Kommunikation zwischen den Steuereinheiten MGC-A und MGC-B und den Netzzugangseinrichtungen MG auch mit Hilfe des H.248 Protokolls erfolgen. Die Signalisierung zwischen den beiden Steuereinheiten MGC-A und MGC-B geschieht mit Hilfe des BICC CS2 oder mit Hilfe einer entsprechend angepassten Version des ISUP (ISDN user part) Protokolls.

Im folgenden wird anhand von Figur 3 dargestellt, wie aus einer bestehende Verbindung zwischen den Endgeräten TLN-A und TLN-B durch das erfindungsgemäße Verfahren eine Verbindung zwischen dem Endgerät TLN-A und dem IVR Server IVR-S erzeugt wird. Dieses Ereignis wird vom CMN veranlasst. Dabei steuert der CMN den IVR Server IVR-S unter Verwendung eines geeigneten Protokolls, wie z.B. dem Mediagatewayprotokoll MGCP oder dem H.248 Protokoll. Der CMN prüft beim der vorgelagerten Steuervorrichtung MGC-A mit Hilfe des Informationselements BEARER REDIRECTION CAPABILITY, ob diese die Prozedur BEARER REDIRECTION unterstützt. Wird die Prozedur unterstützt, wird die vorgelagerten Steuervorrichtung MGC-A mit einer APM Nachricht BEARER REDIRECT REQUEST/FORWARD aufgefordert, eine weitere Verbindung aufzubauen. Die vorgelagerte Steuervorrichtung MGC-A antwortet dann mit einer APM CONNECT FORWARD und mit weiteren den Verbindungsaufbau betreffenden Informationen. Der CMN tauscht auf den Erhalt der APM CONNECT FORWARD mit dem IVR Server IVR-S Signalisierungsinformationen im Rahmen des Verbindungsaufbaus aus. Die für den Aufbau der Nutzdaten-Verbindung notwendige, sich auf den IVR Server IVR-S beziehende Adressinformation wird von dem CMN an die vorgelagerten Steuervorrichtung MGC-A übermittelt und von dort mit Hilfe des MGCP Protokolls an die Netzzugangseinrichtung MG-A weitergegeben. Mit Hilfe der Adressinformation wird eine Nutzdaten-Verbindung, beispielsweise eine VoIP (Voice over IP) Verbindung, zwischen der Netzzugangseinrichtung MG-A und dem IVR Server IVR-S hergestellt

Gleichzeitig zur Einleitung des Aufbaus einer Nutzdaten-Verbindung zu dem IVR Server IVR-S kann vom CMN die Auflösung der in Figur 2 dargestellten Verbindung zwischen den Endgeräten TLN-A und TLN-B bzw. der Nutzdaten-Verbindung zwischen den Netzzugangseinrichtungen MG-A und MG-B angestoßen werden. Dazu sendet der CMN zu der vorgelagerten Steuervorrichtung MGC-A die APM BEARER REDIRECT/REDIRECT RELEASE REQUEST. Die vorgelagerte Steuervorrichtung MGC-A antwortet mit der APM Nachricht REDIRECT BEARER RELEASE PROCEED zum CMN. Empfängt der CMN die APM Nachricht mit BEARER REDIRECT/REDIRECT RELEASE PROCEED, löst der CMN die Verbindung zum MGC-B bzw. MG-B mit REL (release message) aus. Das MGC-B antwortet dann mit RLC (release message complete). Daraufhin sendet der CMN eine APM Nachricht BEARER REDIRECT/REDIRECT RELEASE COMPLETE zur Steuervorrichtung MGC-A zurück.

Alternativ zur Bereitstellung von IVR Ressourcen bei dem CMN kann der CMN auch den Zugriff auf IVR Ressourcen ermöglichen, die von einem SN aus kontrolliert bzw. gesteuert werden. Das ist in Figur 4 dargestellt. Der IVR-Server IVR-S wird nun von der Steuereinrichtung MGC-B gesteuert, der Funktionen eines SN bereitstellt. Aus Gründen der Darstellungsökonomie wird bei dem zweiten Ausführungsbeispiel der IVR-Server IVR-S von derselben Steuereinrichtung gesteuert, wie die Netzzugangseinrichtung MG-B, die als Redirect-From für die Nutzdaten-Verbindung fungiert. Das erfindungsgemäße Verfahren ist davon unabhängig. Ebenso gut kann der IVR Server IVR-S mit einer von MGC-B unterschiedlichen Steuereinrichtung bzw. SN den Redirect-To Knotenpunkt bilden.

Das Verfahren entsprechend Figur 4 läuft in großen Teilen wie das Verfahren entsprechend Figur 3 ab. Es wird im folgenden nur auf die Unterschiede eingegangen. Bei einem Ereignis im CMN, das die Bereitstellung von IVR Ressourcen auslöst, wird von dem CMN geprüft, ob auf IVR Ressourcen zur Verfügung stehen. Dem CMN hat beispielsweise einen Eintrag mit einer Adressinformation, der auf die Verfügbarkeit von IVR Ressourcen bei der Steuereinrichtung MGC-B hinweist. Wie oben stößt der CMN die BICC Prozedur BEARER REDIRECTION in dem BC-Anchor bzw. der Steuereinrichtung MGC-A an. Die Steuereinrichtung MGC-A sendet für den Aufbau einer neuen Nutzdaten-Verbindung eine Nachricht zu dem CMN. Dabei handelt es sich um eine APM Nachricht mit dem Indikator "Connect Forward" bzw. "Connect Backward' sowie weiteren Informationen im Sinne des Aufbaus einer Nutzdaten-Verbindung. In dem CMN wird mit Hilfe der empfangenen Nachricht und gespeicherter Informationen, z.B. des Eintrags zur Lokalisierung der IVR Ressourcen, eine Verbindungsaufbaunachricht IAM (initial address message) mit einer APP (application transport parameter) erzeugt und an die Steuereinrichtung MGC-B, bzw. den Redirect-To Knotenpunkt gesendet. Die Schritte des Verbindungsaufbaus sind im Detail in der Q.1902.6 beschrieben. Im Prinzip wird anschließend in der Gegenrichtung von der Steuereinrichtung MGC-B über das CMN an die Steuereinrichtung MGC-A die Verbindungsaufbaunachricht quittiert und es werden Informationen für den Aufbau der Nutzdaten-Verbindung, wie z.B. die Adresse des IVR Servers IVR-S, übermittelt. Von der Steuereinrichtung MGC-A wird dann mit Hilfe des Mediagatewayprotokolls MGCP der Aufbau der Nutzdaten-Verbindung zwischen der Netzzugangseinrichtung MG-A und dem IVR Server IVR-S abgeschlossen und die dafür notwendigen Informationen übergeben.

## Patentansprüche

1. Verfahren zur Bereitstellung von IVR, interactive voice response, Ressourcen mit Hilfe des BICC Protokolls, bei dem Nutzdaten und Signalisierungsinformationen getrennt übertragen werden,und bei dem in einem CMN, call mediation node, die Bereitstellung von IVR Ressourcen ausgelöst wird, **dadurch gekennzeichnet, dass**
- der CMN bei einem ihm vorgelagerten SN, service node, das Ausführen der BICC Prozedur BEARER REDIRECTION bewirkt und
- mit Hilfe der BICC Prozedur BEARER REDIRECTION eine Nutzdaten-Verbindung, Bearer, für einen Zugriff auf IVR Ressourcen hergestellt wird.

2. verfahren nach Anspruch 1,
**dadurch gekennzeichnet,**
- **dass** die IVR Ressourcen in einem IVR Server oder einem Server mit IVR Funktionalität bereitgestellt werden.

3. Verfahren nach Anspruch 2,
**dadurch gekennzeichnet,**
- **dass** der IVR Server bzw. der Server mit IVR Funktionalität von dem CMN oder einem SN gesteuert wird.

4. Verfahren nach Anspruch 3,
**dadurch gekennzeichnet,**
- **dass** der IVR Server bzw. der Server mit IVR Funktionalität von einem SN gesteuert wird, und
- **dass** der CMN für den Zugriff auf die IVR Ressourcen über einen Eintrag verfügt, mit Hilfe dessen er die IVR Ressourcen lokalisiert.

5. Verfahren nach Anspruch 4,
**dadurch gekennzeichnet,**
- **dass** von dem CMN mit Hilfe des Eintrags eine Verbindungsaufbaunachricht IAM, initial address message, erzeugt wird, die an den SN gesendet wird.

6. Verfahren nach einem der Ansprüche 2 bis 5,
**dadurch gekennzeichnet,**
- **dass** das Mediagatewayprotokoll (MGCP) oder das H.248 oder Q.1950 zur Signalisierung zwischen dem CMN bzw. dem SN und dem IVR Server bzw. dem Server mit IVR Funktionalität zur Anwendung kommt.

7. Verfahren nach einem der vorhergehenden Ansprüche,
**dadurch gekennzeichnet,**
- **dass** eine Nutzdaten-Verbindung vor Durchführung des Verfahrens besteht und
- **dass** die Nutzdaten-Verbindung im Rahmen der BICC Prozedur BEARER REDIRECTION gelöst wird.

8. Verfahren nach einem der Ansprüche 2 bis 7,
**dadurch gekennzeichnet,**
- **dass** in dem CMN eine Abfrage gemacht wird, ob bereits eine Nutzdaten-Verbindung besteht,
- **dass** im Falle einer bestehenden Nutzdaten-Verbindung die Prozedur BEARER REDIRECTION ausgeführt wird und
- **dass** im Falle einer sich im Aufbau befindenden Nutzdaten-Verbindung, der Verbindungsaufbau im Sinne einer Nutzdaten-Verbindung mit dem IVR Server abgeändert wird.

9. Verfahren nach einem der vorhergehenden Ansprüche,
**dadurch gekennzeichnet,**
- **dass** vom CMN überprüft wird, ob der vorgelagerte SN die Prozedur BEARER REDIRECTION unterstützt.

10. Verfahren nach Anspruch 9,
**dadurch gekennzeichnet,**
- **dass** im Fall, dass der vorgelagerte SN die Prozedur BEARER REDIRECTION nicht unterstützt, von dem CMN eine Fehlermeldung, cause value, an den vorgelagerten SN übertragen wird.

11. Verfahren nach einem der vorhergehenden Ansprüche,
**dadurch gekennzeichnet,**
- **dass** in einem dem CMN vorgelagerten oder nachgelagerten SN die Bereitstellung von IVR Ressourcen auslösbar ist und
- **dass** bei einer in dem vorgelagerten bzw. nachgelagerten SN ausgelösten Bereitstellung von IVR Ressourcen die Bereitstellung der IVR Ressourcen mit Hilfe der BICC Prozedur BEARER REDIRECTION vorgenommen wird.

12. Verfahren nach einem der vorhergehenden Ansprüche,
**dadurch gekennzeichnet,**
- **dass** die Nutzdaten über ein Paketnetz übertragen werden,
- **dass** der CMN bei einem vorgelagerte SN (MGC-A) das Ausführen der Prozedur BEARER REDIRECTION anfordert, und
- **dass** der SN (MGC-A) bei einer von ihr kontrollierten Netzzugangseinrichtung (MG-A) den Aufbau eines Nutzdatenstroms zu einem IVR Server bewirkt.

13. Verfahren nach Anspruch 12,
**dadurch gekennzeichnet,**
- **dass** die Nutzdaten über ein IP Netz oder ein ATM Netz übertragen werden.

14. Verfahren nach einem der vorhergehenden Ansprüche,
**dadurch gekennzeichnet,**
- **dass** die IVR Ressourcen für eine VOIP, Voice over IP, Verbindung verfügbar gemacht werden.

## Claims

1. Method for providing IVR, interactive voice response, resources using the BICC protocol in which useful data and signaling information is transmitted separately, and in which the provision of IVR resources is triggered in a CMN, call mediation node,
**characterized in that**
- the CMN effects the execution of the BEARER REDIRECTION BICC procedure when there is an SN, service node, arranged upstream of it, and
- a useful data connection, bearer, for an access to IVR resources is established using the BEARER REDIRECTION BICC procedure.

2. Method according to Claim 1,
**characterized**
- **in that** the IVR resources are provided in an IVR server or a server with IVR functionality.

3. Method according to Claim 2,
**characterized**
- **in that** the IVR server or the server with IVR functionality is controlled by the CMN or an SN.

4. Method according to Claim 3,
**characterized**
- **in that** the IVR server or the server with IVR functionality is controlled by an SN, and
- **in that**, for access to the IVR resources, the CMN has an entry which it uses to localize the IVR resources.

5. Method according to Claim 4,
**characterized**
- **in that** with the aid of the entry a connection set up message IAM, initial address message, is generated by the CMN output which is transmitted to the SN.

6. Method according to one of Claims 2 to 5,
**characterized**
- **in that** the media gateway protocol (MGCP) or the H.248 or Q.1950 is used for signaling between the CMN or SN and the IVR server or the server with IVR functionality.

7. Method according to one of the preceding claims,
**characterized**
- **in that** a useful data connection exists before the method is carried out, and
- **in that** the useful data connection is released within the framework of the BEARER REDIRECTION BICC procedure.

8. Method according to one of Claims 2 to 7,
**characterized**
- **in that** in the CMN an interrogation is carried out to determine whether a useful data connection already exists,
- **in that** in the case of an existing useful data connection the BEARER REDIRECTION procedure is carried out and
- **in that** in the case of a useful data connection which is being set up, the connection set up is changed in the sense of a useful data connection with the IVR server.

9. Method according to one of the preceding claims,
**characterized**
- **in that** the CMN checks whether the SN which is arranged upstream supports the BEARER REDIRECTION procedure.

10. Method according to Claim 9,
**characterized**
- **in that** if the SN arranged upstream does not support the BEARER REDIRECTION procedure, the CMN transmits a fault message, cause value, to the SN arranged upstream.

11. Method according to one of the preceding claims,
**characterized**
- **in that** the provision of IVR resources can be triggered in an SN which is arranged upstream or downstream of the CMN, and
- **in that** when a provision of IVR resources is triggered in the SN which is arranged upstream or downstream, the IVR resources are provided using the BEARER REDIRECTION BICC procedure.

12. Method according to one of the preceding claims,
**characterized**
- **in that** the useful data are transmitted via a packet network,
- **in that** when there is an SN arranged upstream (MGC-A), the CMN requests the execution of the BEARER REDIRECTION procedure, and
- **in that** the SN (MGC-A) effects the setting up of a useful data stream to an IVR server at a network access device (MG-A) which is controlled by it.

13. Method according to Claim 12,
**characterized**
- **in that** the useful data are transmitted via an IP network or an ATM network.

14. Method according to one of the preceding claims,
**characterized**
- **in that** the IVR resources are made available for a VoIP, voice over IP, connection.

## Revendications

1. Procédé de mise à disposition de ressources IVR, interactive voice response, à l'aide du protocole BICC, dans lequel des données utiles et des informations de signalisation sont transmises séparément, et dans lequel la mise à disposition de ressources IVR est déclenchée dans un CMN, call mediation node, **caractérisé en ce que**
- le CMN provoque l'exécution de la procédure BICC BEARER REDIRECTION au niveau d'un SN, service node, situé en amont et,
- à l'aide de la procédure BICC BEARER REDIRECTION, une liaison de données utiles, Bearer, est établie pour un accès à des ressources IVR.

2. Procédé selon la revendication 1, **caractérisé en ce que** les ressources IVR sont mises à disposition dans un serveur IVR ou un serveur avec fonctionnalité IVR.

3. Procédé selon la revendication 2, **caractérisé en ce que** le serveur IVR ou le serveur avec fonctionnalité IVR est commandé par le CMN ou un SN.

4. Procédé selon la revendication 3, **caractérisé en ce que**
- le serveur IVR ou le serveur avec fonctionnalité IVR est commandé par un SN et
- le CMN dispose, pour l'accès aux ressources IVR, d'un enregistrement à l'aide duquel il localise les ressources IVR.

5. Procédé selon la revendication 4, **caractérisé en ce que** le CMN, à l'aide de l'enregistement, génère un message d'établissement de liaison IAM, initial address message, qui est envoyé au SN.

6. Procédé selon l'une des revendications 2 à 5, **caractérisé en ce que** le protocole de passerelle média (MGCP) ou le H.248 ou la Q.1950 sont appliqués aux fins de la signalisation entre le CMN ou le SN et le serveur IVR ou le serveur avec fonctionnalité IVR.

7. Procédé selon l'une des revendications précédentes, **caractérisé en ce que**
- une liaison de données utiles existe avant l'exécution du procédé et
- la liaison de données utiles est défaite dans le cadre de la procédure BICC BEARER REDIRECTION.

8. Procédé selon l'une des revendications 2 à 7, **caractérisé en ce que**
- une interrogation est effectuée dans le CMN pour savoir s'il existe déjà une liaison de données utiles,
- s'il existe une liaison de données utiles, la procédure BEARER REDIRECTION est exécutée et,
- dans le cas d'une liaison de données utiles en train de s'établir, l'établissement de la liaison est modifié au sens d'une liaison de données utiles avec le serveur IVR.

9. Procédé selon l'une des revendications précédentes, **caractérisé en ce que** le CMN vérifie si le SN situé en amont supporte la procédure BEARER REDIRECTION.

10. Procédé selon la revendication 9, **caractérisé en ce que**, si le SN situé en amont ne supporte pas la procédure BEARER REDIRECTION, le CMN transmet un message d'erreur, cause value, au SN situé en amont.

11. Procédé selon l'une des revendications précédentes, **caractérisé en ce que**
- la mise à disposition de ressources IVR peut être déclenchée dans un SN situé en amont ou en aval du CMN et,
- en cas de mise à disposition de ressources IVR déclenchée dans le SN situé en amont ou en aval, la mise à disposition des ressources IVR est effectuée à l'aide de la procédure BICC BEARER REDIRECTION.

12. Procédé selon l'une des revendications précédentes, **caractérisé en ce que**
- les données utiles sont transmises sur un réseau de paquets,
- le CMN, étant donné un SN situé en amont (MGC-A), demande l'exécution de la procédure BEARER REDIRECTION et
- le SN (MGC-A), étant donné un dispositif d'accès réseau (MG-A) qu'elle contrôle, provoque l'établissement d'un flux de données utiles vers un serveur IVR.

13. Procédé selon la revendication 12, **caractérisé en ce que** les données utiles sont transmises sur un réseau IP ou un réseau ATM.

14. Procédé selon l'une des revendications précédentes, **caractérisé en ce que** les ressources IVR sont rendues disponibles pour une liaison VoIP, Voice over IP.
